# EUROPÄISCHE PATENTSCHRIFT

(11) **EP 3 045 874 B1**
(45) Veröffentlichungstag und Bekanntmachung des Hinweises auf die Patenterteilung: **08.01.2020**
(21) Anmeldenummer: 15195758.6
(22) Anmeldetag: 23.11.2015
(51) Int. Cl.: G01F 1/58, G01F 15/00, G01F 15/10

(54) **MAGNETISCH-INDUKTIVES DURCHFLUSSMESSGERÄT**
MAGNETIC-INDUCTIVE FLOW METER
DÉBITMÈTRE MAGNÉTO-INDUCTIF

(30) Priorität: 14.01.2015 DE 102015000110; 01.10.2015 DE 102015116674
(43) Veröffentlichungstag der Anmeldung: 20.07.2016
(73) Patentinhaber: Krohne AG, 4019 Basel (CH)
(72) Erfinder: Beerling, Freek, 4826 HK Breda (NL); Heijnsdijk, Alexander Marnix, 3356 BW Papendrecht (NL); Neven, Josef, 26540 Mours St. Eusebe (FR); Nicolas, Christian, 26300 Chatuzange le Goubet (FR)
(74) Vertreter: Gesthuysen Patent- und Rechtsanwälte

(56) Entgegenhaltungen:
- DE-A1-102012 111 757
- US-A- 4 195 515
- US-A- 5 325 728

## Beschreibung

Die Erfindung betrifft ein magnetisch-induktives Durchflussmessgerät zur Durchflussmessung eines strömenden Mediums, mit einer Messleitung, mit einer Magnetfelderzeugungseinrichtung zur Erzeugung eines die Messleitung wenigstens teilweise durchsetzenden Magnetfeldes und mit mindestens einer Messelektrode zum Abgreifen einer in dem strömenden Medium induzierten Messspannung, wobei die Messleitung einen mittleren, die Messelektroden aufweisenden, zumindest einseitig abgeflachten Messabschnitt mit einer ebenen Messleitungsteilfläche, nachfolgend immer Teilfläche, aufweist und wobei zu der Magnetfelderzeugungseinrichtung mindestens ein Spulenkern und ein Polschuh gehören.

Nach dem faradayschen Induktionsgesetz entsteht in einem von einem Magnetfeld durchsetzten strömenden, elektrisch leitfähigen Medium eine elektrische Feldstärke senkrecht zur Strömungsrichtung des Mediums und senkrecht zum Magnetfeld. Das faradaysche Induktionsgesetz wird bei magnetisch-induktiven Durchflussmessgeräten dadurch ausgenutzt, dass mittels einer Magnetfelderzeugungseinrichtung, die meistens mindestens eine Magnetfeldspule aufweist, meistens ein während des Messvorgangs sich zeitlich veränderndes Magnetfeld erzeugt wird und das Magnetfeld wenigstens teilweise das durch die Messleitung strömende elektrisch leitfähige Medium durchsetzt. Dabei weist das Magnetfeld wenigstens eine Komponente senkrecht zur Längsachse der Messleitung bzw. senkrecht zur Strömungsrichtung des Mediums auf.

Wenn es einleitend heißt, dass zu dem magnetisch-induktiven Durchflussmessgerät mindestens eine Magnetfelderzeugungseinrichtung "zur Erzeugung eines zumindest auch senkrecht zur Längsachse der Messleitung verlaufenden Magnetfeldes" gehört, dann sei hier noch einmal darauf hingewiesen, dass das Magnetfeld zwar vorzugsweise senkrecht zur Längsachse der Messleitung bzw. senkrecht zur Strömungsrichtung des Mediums verläuft, ausreichend jedoch ist, dass eine Komponente des Magnetfeldes senkrecht zur Längsachse der Messleitung bzw. senkrecht zur Strömungsrichtung des Mediums verläuft.

Weiter oben heißt es auch, dass die Magnetfelderzeugungseinrichtung zur Erzeugung eines vorzugsweise wechselnden Magnetfeldes bestimmt ist. Dadurch wird zum Ausdruck gebracht, dass es für die Lehre der Erfindung nicht darauf ankommt, ob es sich um ein wechselndes Magnetfeld, also um ein elektromagnetisches Wechselfeld, handelt. Es sei jedoch darauf hingewiesen, dass magnetisch-induktive Durchflussmessgeräte überwiegend Magnetfelderzeugungseinrichtungen haben, die ein wechselndes Magnetfeld erzeugen.

Eingangs ist auch ausgeführt, dass zu dem in Rede stehenden magnetisch-induktiven Durchflussmessgerät mindestens eine die in dem elektrisch leitenden Medium induzierte Messspannung abgreifende Messelektrode gehört. Oft sind zwei Messelektroden vorhanden. Vorzugsweise berühren diese Messelektroden das Medium und verläuft die virtuelle Verbindungslinie der beiden Messelektroden zumindest im Wesentlichen senkrecht zur Richtung des die Messleitung senkrecht zur Längsachse der Messleitung durchsetzenden Magnetfeldes. Insbesondere können die Messelektroden so vorgesehen sein, dass deren virtuelle Verbindungslinie tatsächlich - mehr oder weniger - senkrecht zur Längsachse der Messleitung durchsetzenden Magnetfeldes verläuft.

Es ist bereits ausgeführt, dass es sich bei den Messelektroden insbesondere um solche handeln kann, die das Medium berühren. Tatsächlich kann selbstverständlich die durch Induktion im strömenden, elektrisch leitfähigen Medium erzeugte elektrische Feldstärke durch direkt, also galvanisch mit dem Medium in Kontakt stehende Messelektroden als Messspannung abgegriffen werden. Es gibt aber auch magnetisch-induktive Durchflussmessgeräte, bei denen die Messspannung nicht durch direkt, also nicht durch galvanisch mit dem Medium in Kontakt stehende Messelektroden abgegriffen wird, vielmehr die Messspannung kapazitiv abgegriffen wird.

Zu den im Stand der Technik bekannten magnetisch-induktiven Durchflussmessgeräten wird beispielhaft verwiesen auf die DE 692 32 633 C2, die DE 199 07 864 A1, die DE 100 64 738 B4, die DE 102 43 748 A1, die DE 10 2008 005 258 A1 und DE 10 2011 112 703 A1 sowie auch auf die EP 0 704 682 A1 und die EP 0 834 057 A1. Insbesondere wird verwiesen auf die DE 10 2008 057 756 A1, aus der das eingangs beschriebene magnetisch-induktive Durchflussmessgeräte bekannt ist. Bei diesem bekannten magnetisch-induktiven Durchflussmessgerät weist die Messleitung über die Länge einen veränderlichen Querschnitt auf und ist der Querschnitt im mittleren Bereich der Messleitung, einleitend mit Messabschnitt bezeichnet, geringer als am Anfang der Messleitung und am Ende der Messleitung. Dabei ist der Querschnitt der Messleitung in ihrem mittleren Bereich, also im Messabschnitt, rechteckig, gegebenenfalls auch quadratisch. Demgegenüber geht die Erfindung von einem magnetisch-induktiven Durchflussmessgerät aus, bei dem der Messabschnitt der Messleitung funktionsnotwendig nur eine ebene Messleitungsteilfläche, einleitend mit Teilfläche bezeichnet, aufweist. Zwar kann auch bei erfindungsgemäßen magnetisch-induktiven Durchflussmessgeräten der Messabschnitt zwei oder mehr ebene Messleitungsteilflächen aufweisen, für die weiter unten erläuterte Lehre der Erfindung ist jedoch eine ebene Messleitungsteilfläche ausreichend.

Bekannte magnetisch-induktive Durchflussmessgeräte sind häufig dadurch insgesamt "stabile Konstruktionen", dass die Messleitung oder / und das Messgerätgehäuse aus Metall bestehen. Bei den Messleitungen handelt es sich in aller Regel um Messrohre, also um zylindrische Hohlkörper mit einem kreisringförmigen Querschnitt. Auch die Messgerätgehäuse sind häufig als zylindrische Hohlkörper mit einem kreisringförmigen Querschnitt oder einem im Wesentlichen kreisringförmigen Querschnitt ausgeführt. Außerdem gilt für die meisten bekannten magnetisch-induktiven Durchflussmessgeräte, dass die Messgerätgehäuse beidseitig aus Metall bestehende Abschluss- und Anschlussflansche aufweisen. Einerseits schließen diese Abschluss- und Anschlussflansche, mit denen die beiden Enden der Messleitung - direkt oder indirekt - verbunden sind, das Durchflussmessgerät ab, darum der Ausdruck "Abschlussflansch". Andererseits dienen die Abschluss- und Anschlussflansche dem beiderseitigen Anschluss des Durchflussmessgeräts an entsprechende Rohrleitungsflansche, darum der Ausdruck "Anschlussflansch".

Magnetisch-induktive Durchflussmessgeräte müssen unter anderem und vor allem erheblichen Anforderungen an die Messgenauigkeit genügen. Dabei ist zu berücksichtigen, dass die in dem strömenden, elektrisch leitfähigen Medium induzierte Messspannung relativ niedrig ist. Das gilt schon für "normale Verhältnisse". Unter "normale Verhältnisse" soll eine nicht besonders geringe Strömungsgeschwindigkeit und eine nicht besonders geringe elektrische Leitfähigkeit des strömenden Mediums verstanden werden. Bei messtechnisch "erschwerten Voraussetzungen", das heißt bei geringen Strömungsgeschwindigkeiten und / oder bei geringer elektrischer Leitfähigkeit des strömenden Mediums werden besonders niedrige Messspannungen induziert, - mit der Konsequenz, dass auch - absolut gesehen - relativ niedrige Störspannungen die Messgenauigkeit signifikant beeinflussen.

Hierdurch ergibt sich, dass ein möglichst starkes Magnetfeld in der Messleitung erzeugt werden sollte, so dass vorzugsweise auch alle Abschwächungen möglichst zu reduzieren sind. Dies bedingt es z. B. im Stand der Technik, dass im Messabschnitt die Wandstärken möglichst gering gewählt werden.

Bei einer Ausführungsform des aus der DE 10 2008 057 756 A1 bekannten magnetisch-induktiven Durchflussmessgeräts ist die Wandstärke der Messleitung im Messabschnitt geringer als am Anfang der Messleitung und am Ende der Messleitung. Wegen der Druckbeanspruchbarkeit der Messleitung ist im Bereich des Messabschnitts mindestens eine die Messleitung mit dem Messgerätgehäuse verbindende Verstärkung vorgesehen.

Weiter oben ist ausgeführt, dass bekannte magnetisch-induktive Durchflussmessgeräte häufig dadurch insgesamt "stabile Konstruktionen" sind, dass die Messleitung oder / und das Messgerätgehäuse aus Metall bestehen. Eine erhöhte Stabilität kann - auch bei einer metallischen Messleitung - erforderlich sein, wenn eine hohe Druckbeanspruchung besteht. Es kann jedoch auch angebracht sein, die Messleitung und gegebenenfalls auch das Messgerätgehäuse aus einem relativ gering beanspruchbaren - und damit kostengünstigen - Material herzustellen, insbesondere aus relativ preisgünstigem Kunststoff.

Der Bedarf nach hoher Stabilität kann sich somit einerseits durch die Anwendung - also durch die herrschenden Drücke - ergeben. Andererseits kann dies durch die Wahl der Werkstoffe - z. B. Kunststoff - bedingt sein.

Auch kann sich ein Zielkonflikt ergeben: Einerseits muss bei einem magnetisch-induktiven Durchflussmessgerät, dessen Messleitung aus einem relativ gering beanspruchbaren Kunststoff besteht, die Messleitung, auch im Bereich des Messabschnitts, eine beachtliche Dicke aufweisen. Eine solche Dicke ist auch dann erforderlich, wenn die Messleitung zwar aus Metall besteht, aber hohe Drücke in der Messleitung auftreten können. Andererseits soll die Magnetfelderzeugungseinrichtung in der Messleitung ein relativ starkes und weitgehend homogenes Magnetfeld erzeugen. Dies führt im Stand der Technik beispielsweise dazu, dass die Messleitung mit einem einseitig abgeflachten Messabschnitt mit einer ebenen Messleitungsteilfläche, nachfolgend immer Teilfläche, realisiert ist und die Messleitung im Bereich der Teilfläche nur eine relativ geringe Dicke hat.

Das, was zuvor beschrieben ist, führt dazu, dass die Magnetfelderzeugungseinrichtung in der Messleitung ein relativ starkes und weitgehend homogenes Magnetfeld erzeugen kann, weil der Polschuh unmittelbar und flächig auf der ebenen Teilfläche und damit nahe dem Inneren der Messleitung angeordnet sein kann.

Aus den Schriften US 4,195,515 A und US 5,325,728 A sind magnetisch-induktive Durchflussmessgeräte mit abgeflachten Kunststoffmessleitungen bekannt. Die Schrift DE 10 2012 111 757 A1 offenbart ein Durchflussmessgerät, das vom magnetisch-induktiven Typ sein kann, mit einer quadratischen Kunststoffmessleitung, auf der Abstützrippen angeordnet sind.

Der Erfindung liegt die Aufgabe zugrunde, ein zum Stand der Technik verbessertes magnetisch-induktives Durchflussmessgerät anzugeben.

Das erfindungsgemäße magnetisch-induktive Durchflussmessgerät, bei dem die zuvor hergeleitete und aufgezeigte Aufgabe gelöst ist, ist zunächst und im Wesentlichen dadurch gekennzeichnet, dass zwischen der Messleitungsteilfläche, nachfolgend immer wieder nur als Teilfläche bezeichnet, und dem Polschuh mehrere - vorzugsweise drei oder vier - Abstütznasen vorhanden sind.

Ist bei den in Rede stehenden magnetisch-induktiven Durchflussmessgeräten die Teilfläche, um das erzeugte Magnetfeld nur möglichst gering abzuschwächen, relativ dünn ausgeführt oder treten in der Messleitung ggf. hohe Drücke auf, so gilt es durch Maßnahmen entweder zu verhindern, dass die Teilfläche nach außen ausbeult, oder entsprechend darauf zu reagieren. Ein Ausbeulen würde die Lage und die Ausrichtung des auf der Teilfläche aufsitzenden Polschuhs ungewollt und unerwünscht verändern. Die erfindungsgemäß vorhandenen Abstütznasen definieren, besser als das eine größere Fläche kann, die die Lage und die Ausrichtung des Polschuhs bestimmende Ebene.

Daher befinden sich die Abstütznasen dort, wo infolge des Drucks in der Messleitung die geringste Bewegung oder möglich sogar keine Bewegung zu erwarten ist, so dass der Polschuh entsprechend ruhig positioniert ist und keine oder nur kaum Lageänderungen erfährt.

Dabei sind die Abstütznasen, der Polschuh und die Teilfläche derartig ausgestaltet und aufeinander abgestimmt, dass der Polschuh möglich nah an der Messleitung und für die Erzeugung des Magnetfelds möglichst optimal ausgerichtet ist.

In einer Ausgestaltung ist vorgesehen, dass die Abstütznasen dem Polschuh und/oder der Teilfläche zugehörig sind. Die Zugehörigkeit ergibt sich dabei durch die Fixierung und/oder durch die Ausgestaltung als Teil des Polschuhs bzw. der Teilfläche. Die Abstütznasen sind dabei entweder alle dem Polschuh oder alle der Teilfläche zugeordnet. Alternativ ist ein Teil der Abstütznasen dem Polschuh und ist der restliche Teil der Abstütznasen der Teilfläche zugeordnet. Dabei können die Abstütznasen jeweils direkt an dem Polschuh bzw. der Teilfläche angeformt oder dort entsprechend befestigt sein.

In einer weiteren Variante sind die Abstütznasen separate Bauteile, die zwischen dem Polschuh und der Teilfläche positioniert und ggf. zumindest mit dem Polschuh oder der Teilfläche befestigt sind.

Bei einer besonders bevorzugten Ausführungsform des erfindungsgemäßen magnetisch-induktiven Durchflussmessgeräts besteht der Polschuh aus mehreren Polschuhteilen.

In einer alternativen Ausgestaltung ist der Polschuh einstückig.

In einer Ausgestaltung ruht der Polschuh auf den Abstütznasen, wird also allein durch die Abstütznasen getragen. In einer Ausgestaltung ist der Polschuh frei von einem weiteren Kontakt mit der Teilfläche und wird daher nur durch die Abstütznasen abgestützt.

Bei einer Ausführungsform spannen die Abstütznasen auf der Teilfläche eine geometrische Form auf, die im Wesentlichen einer Fläche entspricht, die der Polschuh auf der Teilfläche überdeckt. In einer Ausgestaltung befinden sich die Abstütznasen im Bereich der Ecken der Fläche, die vom Polschuh auf der Teilfläche überdeckt wird. Ist also beispielsweise die überdeckte Fläche auf der Teilfläche - als Projektion des Polschuhs auf die Teilfläche - ein Viereck, so befinden sich vorzugsweise vier Abstütznasen jeweils im Bereich der Ecken, die das Viereck begrenzen.

In einer weiteren Ausgestaltung ist der Polschuh entlang einer Längsachse der Messleitung zwischen zwei Anschlagselementen angeordnet. Diese Ausgestaltung wird in einer Ausgestaltung dadurch ergänzt, dass der Polschuh die zwei Anschlagselemente zumindest teilweise umfasst. In einer Ausgestaltung verfügt der Polschuh stirnseitig über jeweils eine Aussparung, in der jeweils ein Anschlagselement teilweise hineinragt.

Bei einer Ausführungsform ist der Polschuh und/oder der Spulenkern zumindest teilweise durch das MIM-Verfahren (MIM = Metal Inspection Molding) hergestellt.

Wie zuvor im Einzelnen dargelegt, gibt es verschiedene Möglichkeiten, das erfindungsgemäße magnetisch-induktive Durchflussmessgerät auszugestalten und weiterzubilden. Dazu wird verwiesen auf die dem Patentanspruch 1 nachgeordneten Patentansprüche und auf die nachfolgende Beschreibung in Verbindung mit der Zeichnung. In der Zeichnung zeigen
- Fig. 1: eine perspektivische Darstellung einer zu einem magnetisch-in-duktiven Durchflussmessgerät gehörenden Messleitung und
- Fig. 2: eine perspektivische Darstellung einer zu einem magnetisch-in-duktiven Durchflussmessgerät gehörenden Messleitung mit einem Teil der funktionsnotwendigen Magnetfelderzeugungseinrichtung.

Wie einleitend ausgeführt, gehören zu magnetisch-induktiven Durchflussmessgeräten eine Messleitung 1, durch die das Medium strömt, dessen Durchfluss gemessen werden soll, eine - hier nur teilweise dargestellte - Magnetfelderzeugungseinrichtung 2 zur Erzeugung eines die Messleitung 1 wenigstens teilweise durchsetzenden Magnetfeldes und - in dem dargestellten Ausführungsbeispiel - zwei Messelektroden 3 zum Abgreifen einer in dem strömenden Medium induzierten Messspannung. Im Allgemeinen sind noch - hier jedoch nicht dargestellt - eine Auswerteeinheit und ein Messgerätgehäuse vorhanden.

Bei den erfindungsgemäßen magnetisch-induktiven Durchflussmessgeräten hat die Messleitung 1 einen mittleren, die Messelektroden 3 aufweisenden, einseitig abgeflachten Messabschnitt 4 mit einer ebenen Messleitungsfläche, nachfolgend immer Teilfläche 5 genannt. Zu der nur angedeuteten Magnetfelderzeugungseinrichtung 2 gehören eine - hier für die Übersichtlichkeit nicht dargestellte - Magnetspule, ein Spulenkern 6 und mindestens ein Polschuh 7.

Die Messleitung 1 besteht hier beispielhaft aus Kunststoff. Verwendung findet die Erfindung jedoch auch bei metallischen Messleitungen 1. Unter Berücksichtigung des Drucks, der in der Messleitung 1 vorliegen kann, muss die Messleitung 1, auch im Messabschnitt 4, eine bestimmte Druckbeanspruchbarkeit haben. Deshalb haben die verschiedenen Bereiche der Messleitung 1 in der Regel eine relativ große Dicke. Das gilt jedoch nicht für die Teilfläche 5 des dargestellten Ausführungsbeispiels. Diese hat eine relativ geringe Dicke, damit das zu erzeugende Magnetfeld möglichst kaum abgeschwächt wird.

Daraus kann sich ergeben, dass die Messleitung 1 bei einem entsprechend hohen Druck nach außen ausgebeult wird. Dadurch liegt eine Teilfläche 5 vor, die nicht, wie eigentlich erforderlich, eben bzw. plan ist. Damit geht einher, dass auch der Abstand zum Polschuh 7 differieren kann, was sich wiederum negativ auf das erzeugte Magnetfeld auswirkt.

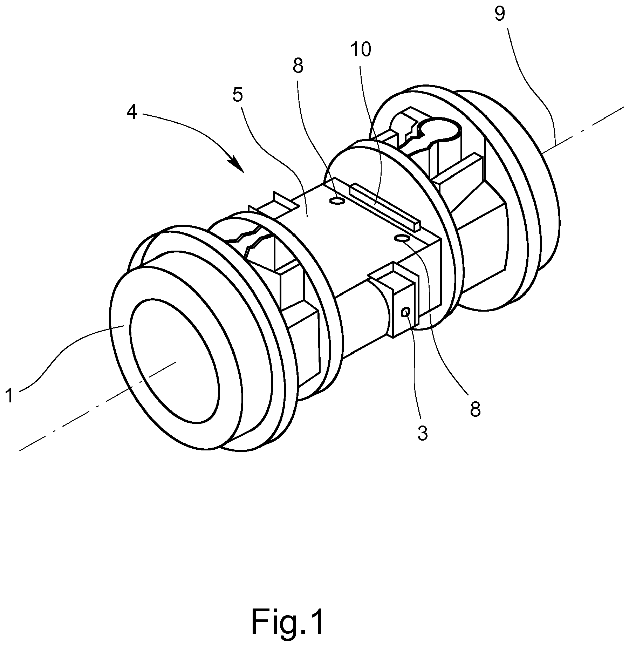

Daher ist erfindungsgemäß der Polschuh 7 nicht direkt auf der Teilfläche 5 aufgebracht, sondern wird auf der Teilfläche 5 von mehreren - in der in der Fig. 1 angedeuteten Variante von vier und ungefähr zylindrisch ausgestalteten - Abstütznasen 8 abgestützt.

Dabei sind die Abstütznasen 8 dort positioniert, wo sich ein erhöhter Druck in der Messleitung 1 möglichst wenig auf die Teilfläche 5 auswirkt, also beispielsweise am Rand der Teilfläche 5. Die optimale Positionierung hängt dabei von dem Eigenschaften der Messleitung 1 und auch der Form des Polschuhs 7 ab.

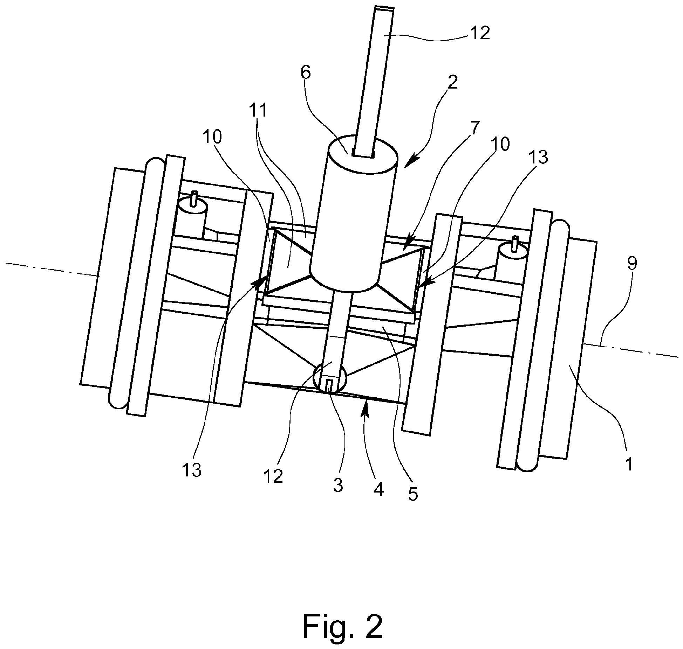

Wie der Vergleich der Fig. 1 mit der Fig. 2 auch verdeutlicht, definieren die vier Abstütznasen 8 die Fläche auf der Teilfläche 5, die von dem Polschuh 7 überdeckt wird, nämlich jeweils ein Rechteck.

In den dargestellten Ausführungsbeispielen besteht der Polschuh 7, wie die Fig. 2 zeigt, aus mehreren und hier beispielhaft vier Polschuhteilen 11.

Wie die Fig. 1 zu entnehmen ist, liegen sich auf der Teilfläche 5 entlang der Längsachse 9 der Messleitung 1 und damit auch entlang der Strömungsrichtung des - hier nicht dargestellten - Mediums zwei Anschlagselemente 10 gegenüber. Die Anschlagselemente 10 sind hier im Wesentlichen als Zylinder mit einer rechteckigen Grundfläche ausgeführt, die mit ihrer Längsachse im Wesentlichen senkrecht zur Längsachse 9 der Messleitung 1 orientiert sind.

Die Fig. 2 verdeutlicht, dass der Polschuh 7 bzw. dessen vier Polschuhteile 11 zwischen den beiden Anschlagselementen 10 angeordnet sind. Hierfür verfügen die Polschuhteile 11 bzw. der Polschuh 7 an sich über zwei Aussparungen 13, die sich teilweise um die Anschlagselemente 10 legen.

Weiterhin zeigt die Fig. 2 noch die Besonderheit, dass die Messelektrode 3 mit einem Leiter 12 kontaktiert ist, der hier insbesondere als eine flexible Leiterplatte ausgeführt ist und von der Messelektrode 3 durch den Spulenkern 6 geführt ist. Der Spulenkern 6 weist dafür eine durchgehende Aussparung auf und zwischen dem Polschuh 7 und dem Spulenkern 6 gibt es auch einen Durchgang hin zu der Aussparung, so dass hierdurch der Leiter 12 geführt werden kann.

## Patentansprüche

1. Magnetisch-induktives Durchflussmessgerät zur Durchflussmessung eines strömenden Mediums, mit einer Messleitung (1), mit einer Magnetfelderzeugungseinrichtung (2) zur Erzeugung eines die Messleitung (1) wenigstens teilweise durchsetzenden Magnetfeldes und mit mindestens einer Messelektrode (3) zum Abgreifen einer in dem strömenden Medium induzierten Messspannung, wobei die Messleitung (1) einen mittleren, die Messelektrode (3) aufweisenden, zumindest einseitig abgeflachten Messabschnitt (4) mit einer ebenen Messleitungsteilfläche, nachfolgend immer Teilfläche (5), aufweist und wobei zu der Magnetfelderzeugungseinrichtung (2) mindestens ein Spulenkern (6) und ein Polschuh (7) gehören,
**dadurch gekennzeichnet,**
**dass** zwischen der Teilfläche (5) und dem Polschuh (7) mehrere Abstütznasen (8) vorhanden sind, wobei die Abstütznasen (8) dort positioniert sind, wo sich ein erhöhter Druck in der Messleitung (1) wenig auf die Teilfläche (5) auswirkt, nämlich am Rand der Teilfläche (5) positioniert sind, wobei die Abstütznasen (8) die die Lage und die Ausrichtung des Polschuhs (7) bestimmende Ebene definieren, sodass sich bei einem Ausbeulen der Teilfläche (5) die Lage und die Ausrichtung des Polschuhs (7) nicht ungewollt und unerwünscht verändert, sondern der Polschuh (7) entsprechend ruhig positioniert ist und keine oder nur kaum Lageänderungen erfährt.

2. Magnetisch-induktives Durchflussmessgerät nach Anspruch 1, **dadurch gekennzeichnet, dass** die Abstütznasen (8) dem Polschuh (7) und/oder der Teilfläche (5) zugehörig sind.

3. Magnetisch-induktives Durchflussmessgerät nach Anspruch 1 oder 2, **dadurch gekennzeichnet, dass** der Polschuh (7) einstückig ist oder aus mehreren Polschuhteilen (11) besteht.

4. Magnetisch-induktives Durchflussmessgerät nach einem der Ansprüche 1 bis 3, **dadurch gekennzeichnet, dass** der Polschuh (7) auf den Abstütznasen (8) ruht.

5. Magnetisch-induktives Durchflussmessgerät nach einem der Ansprüche 1 bis 4, **dadurch gekennzeichnet, dass** die Abstütznasen (8) auf der Teilfläche (5) eine geometrische Form aufspannen, die im Wesentlichen einer Fläche entspricht, die der Polschuh (7) auf der Teilfläche überdeckt.

6. Magnetisch-induktives Durchflussmessgerät nach einem der Ansprüche 1 bis 5, **dadurch gekennzeichnet, dass** der Polschuh (7) entlang einer Längsachse (9) der Messleitung (1) zwischen zwei Anschlagselementen (10) angeordnet ist.

7. Magnetisch-induktives Durchflussmessgerät nach Anspruch 6, **dadurch gekennzeichnet, dass** der Polschuh (7) die zwei Anschlagselemente (10) zumindest teilweise umfasst.

## Claims

1. Magnetic-inductive flowmeter for measuring flow of a flowing medium, having a measuring tube (1), having a magnetic field generator (2) for generating a magnetic field at least partially permeating the measuring tube (1), having at least one measuring electrode (3) for tapping a measuring voltage induced in the flowing medium, wherein the measuring tube (1) has a central measuring section (4) including the measuring electrodes (3) that is flat on one side having a planar measuring tube portion, called portion (5) in the following, and wherein at least one coil core (6) and one pole shoe (7) belong to the magnetic field generator (2),
**characterized in**
**in that** a plurality of support lugs (8) are present between the portion (5) and the pole shoe (7), wherein the support lugs (8) are positioned where an increased pressure in the measuring tube (1) has little effect on the portion (5), namely at the edge of the portion (5), wherein the support lugs (8) define the plane determining the position and the orientation of the pole shoe (7), so that, in the event of a bulge in the portion (5), the position and the orientation of the pole shoe (7) do not change unintentionally and undesirably, but the pole shoe (7) is positioned correspondingly steadily and undergoes no or only hardly any changes in position.

2. Magnetic-inductive flowmeter according to claim 1, **characterized in that** the support lugs (8) are associated with the pole shoe (7) and/or the portion (5).

3. Magnetic-inductive flowmeter according to claim 1 or 2, **characterized in that** the pole shoe (7) consists of one piece or of several pole shoe parts (11).

4. Magnetic-inductive flowmeter according to any one of claims 1 to 3, **characterized in that** the pole shoe (7) rests on the support lugs (8).

5. Magnetic-inductive flowmeter according to any one of claims 1 to 4, **characterized in that** the support lugs (8) on the portion (5) span a geometric shape which essentially corresponds to a surface which the pole shoe (7) covers on the portion.

6. Magnetic-inductive flowmeter according to any one of claims 1 to 5, **characterized in that** the pole shoe (7) is arranged along a longitudinal axis (9) of the measuring tube (1) between two stop elements (10).

7. Magnetic-inductive flowmeter according to claim 6, **characterized in that** the pole shoe (7) at least partially comprises the two stop elements (10).

## Revendications

1. Débitmètre à induction magnétique, destiné à la mesure du débit d'un milieu en écoulement, ledit débitmètre comprenant une ligne de mesure (1), un dispositif générateur de champ magnétique (2) destiné à générer un champ magnétique traversant au moins partiellement la ligne de mesure (1) et au moins une électrode de mesure (3) destinée à prendre une tension de mesure induite par le milieu en écoulement, la ligne de mesure (1) comportant une section de mesure médiane (4) aplatie au moins d'un côté, pourvue de l'électrode de mesure (3) et ayant une surface partielle de ligne de mesure plane, toujours désignée ci-après par surface partielle (5), et au moins un noyau de bobine (6) et une pièce polaire (7) appartenant au dispositif générateur de champ magnétique (2),
**caractérisé en ce que**
une pluralité d'ergots de support (8) sont présents entre la surface partielle (5) et la pièce polaire (7), les ergots de support (8) étant positionnés à des endroits où une pression accrue dans la ligne de mesure (1) a peu d'effet sur la surface partielle (5), à savoir au bord de la surface partielle (5), les ergots de support (8) définissant le plan qui détermine la position et l'orientation de la pièce polaire (7) de sorte que, lors d'un flambage de la partie surface (5), la position et l'orientation de la pièce polaire (7) ne changent pas de manière intempestive et indésirable mais la pièce polaire (7) est donc positionnée sans contrainte et ne subit que peu ou pas de changements de position.

2. Débitmètre à induction magnétique selon la revendication 1, **caractérisé en ce que** les ergots de support (8) sont associés la pièce polaire (7) et/ou à la surface partielle (5).

3. Débitmètre à induction magnétique selon la revendication 1 ou 2, **caractérisé en ce que** la pièce polaire (7) est d'une seule pièce ou comprend plusieurs parties de pièce polaire (11).

4. Débitmètre à induction magnétique selon l'une des revendications 1 à 3, **caractérisé en ce que** la pièce polaire (7) repose sur les ergots de support (8).

5. Débitmètre à induction magnétique selon l'une des revendications 1 à 4, **caractérisé en ce que** les ergots de support (8) sur la surface partielle (5) ont une forme géométrique qui correspond sensiblement à une surface qui recouvre la pièce polaire (7) sur la surface partielle.

6. Débitmètre à induction magnétique selon l'une des revendications 1 à 5, **caractérisé en ce que** la pièce polaire (7) est disposée le long d'un axe longitudinal (9) de la ligne de mesure (1) entre deux éléments de butée (10).

7. Débitmètre à induction magnétique selon la revendication 6, **caractérisé en ce que** la pièce polaire (7) comprend au moins partiellement les deux éléments de butée (10).
